Europäisches Patentamt

European Patent Office

Office européen des brevets

(11) Publication number: **0 416 142 B1**

# EUROPEAN PATENT SPECIFICATION

(45) Date of publication of patent specification: **24.03.93**  (51) Int. Cl.⁵: **B62D 55/075**

(21) Application number: **89116319.8**

(22) Date of filing: **04.09.89**

(54) **Travel-direction control method and device for a vacuum wall crawler.**

(43) Date of publication of application:
**13.03.91 Bulletin 91/11**

(45) Publication of the grant of the patent:
**24.03.93 Bulletin 93/12**

(84) Designated Contracting States:
**AT BE CH DE ES FR GB GR IT LI LU NL SE**

(56) References cited:
**WO-A-85/02135**
**FR-A- 2 569 140**
**GB-A- 2 164 010**

**PATENT ABSTRACTS OF JAPAN, vol. 7, no.
203 (M-241)(1348), 8 September 1983**

**PATENT ABSTRACTS OF JAPAN, vol. 13, no.
13 (M-783)(3361), 12 January 1989**

(73) Proprietor: **O.N.O. Co., Ltd.**
**1-3-10 Hirakawa-cho**
**Chiyoda-ku Tokyo(JP)**

Proprietor: **M. ENGINEERING CO., LTD.**
**3094-6 Kokubu**
**Ebina-shi, Kanagawa-ken(JP)**

(72) Inventor: **Nagatsuka, Keinichi**
**c/o M. Engineering Co., Ltd. 3094-6 Kobuku**
**Ebina-shi Kanagawa-ken(JP)**

(74) Representative: **Herrmann-Trentepohl, Wer-
ner, Dipl.-Ing. et al**
**Herrmann-Trentepohl, Kirschner, Grosse,
Bockhorni & Partner Forstenrieder Allee 59
W-8000 München 71 (DE)**

Rank Xerox (UK) Business Services
(3.10/3.5x/3.0.1)

## Description

The present invention relates to a travel direction control method for a vacuum wall crawler being adapted to be moved by means of a pair of rotational drive means while holding itsself on a wall with the aid of vacuum suction means and to a travel direction control device for said vacuum wall crawler.

In general a wall crawler of the vacuum suction type is adapted to move on a wall inclined at any angle, while holding itself on the wall by means of vacuum suction means. A crawler of this type is disclosed in the British patent publication no. GB-A- 2 164 010 and is constructed such that of a pair of moving endless belts made of a comparatively thick material having sucking and cushioning properties such as sponge rubber each one is stretched between a drive wheel and a coupled drive wheel on each side of the frame or body of the crawler, intended to act as rotational drive means on each side of the crawler and each one of the belts is provided with vacuum suction means. The directionally stable straight-line movement of the crawler is effected by rotationally driving each of the endless belts at a constant speed while holding the crawler on the wall by means of vacuum suction. A change in the direction of travel or a turning of the crawler is effected by causing a difference in the rotating speeds of the two endless belts.

Unfortunately, the conventional vacuum wall crawler of the above-described construction often fails to travel in straight line in a desired direction, even if both endless belts are driven at the same rotational speed. For example, a wall on which the crawler is to travel is not always accurately level and smooth. The wall rather has uneven areas or projections. Furthermore, the weight ofthe crawler often is not balanced. Such factors tend to vary the intensity of vacuum suction producing a frictional force for holding the crawler on the wall, resulting in that the thickness of the suction section of each of the endless belts varies. Therefore the radius of gyration defined between the rotational center of the drive wheel and the surface ofthe suctional endless belt differs from that between the rotational center of the coupled drive wheel and the surface of the belt. More particularly, this causes a difference in angular speeds of rotation between the suction surfaces of the two endless belts, whereby the crawler fails to accurately move in an exact straight line in the desired direction.

It is the object of the present invention to provide a travelling direction control method and device for a vacuum wall crawler which permits the crawler with high accuracy to constantly travel in straight line in any desired direction irrespective of the evenness of the respective wall on which the crawler is to move, the unbalanced weight of the crawler or the like.

For achieving the object the travel direction control method of the present invention includes detecting a deviation angle of the travel direction of the crawler with respect to a desired straight line course, moving the crawler in a first arc having a curvature to bring the crawler back to the straight-line course, after the distance of the crawler from the straight-line course has decreased to a predetermined amount smaller than the maximum distance, moving the crawler in a second arc having a curvature opposite to the curvature of the first arc in relation to the straight-line course, and repeating the above steps until the crawler has returned to the straight-line course; the device of the present invention comprising an inclination angle detecting sensor (8) arranged on the crawler (A) for detecting an inclination angle of the crawler with respect to the direction of travel of the crawler to generate an inclination angle detecting signal in proportion to said inclination angle, a micro-computer (7) arranged on the crawler for processing said inclination angle detecting signal output from said sensor (8) to control the rotating speeds of said rotational drive means (2a, 2b) depending on said inclination angle detecting signal, to thereby cause said crawler (A) to move in a predetermined direction of travel.

When a crawler of the vacuum suction type deviates from the predetermined direction of travel, such deviation is detected by an inclination angle detecting sensor, which then generates an inclination angle detecting signal. This signal is processed by micro-computer mounted on the crawler and the rotational speeds of rotational drive means on both sides of the crawler are controlled in dependance on the inclination angle detecting signal and will cause the crawler to constantly travel in the predetermined direction of travel.

A preferred embodiment of the present invention will now be described with reference to the enclosed drawings. In the drawings

Fig. 1 (a) and 1 (b)
are a plan view and a side elevation each generally showing a vacuum wall crawler to which an embodiment of a travel direction control device according to the present invention is applied;

Fig. 2
is a fragmentary side elevation showing the generation of a difference in angular speeds of rotation of the surfaces of the rotating endless belts of the wall crawler;

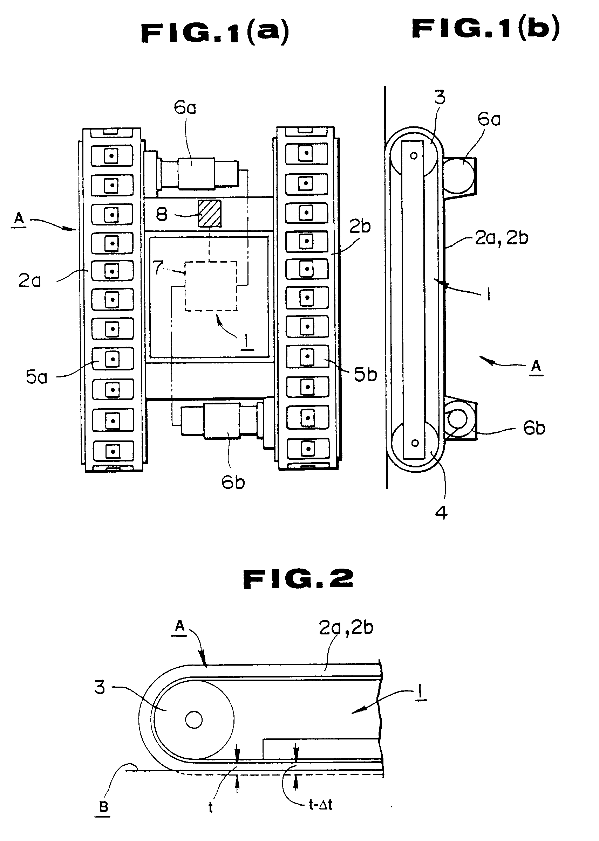

Fig. 3
is a block diagram showing a circuit of the travel direction control device of Fig. 1(a); and

Fig. 4 and Fig. 5

each are schematic views showing the operation and control by the travel direction control device of Fig. 1(a); and

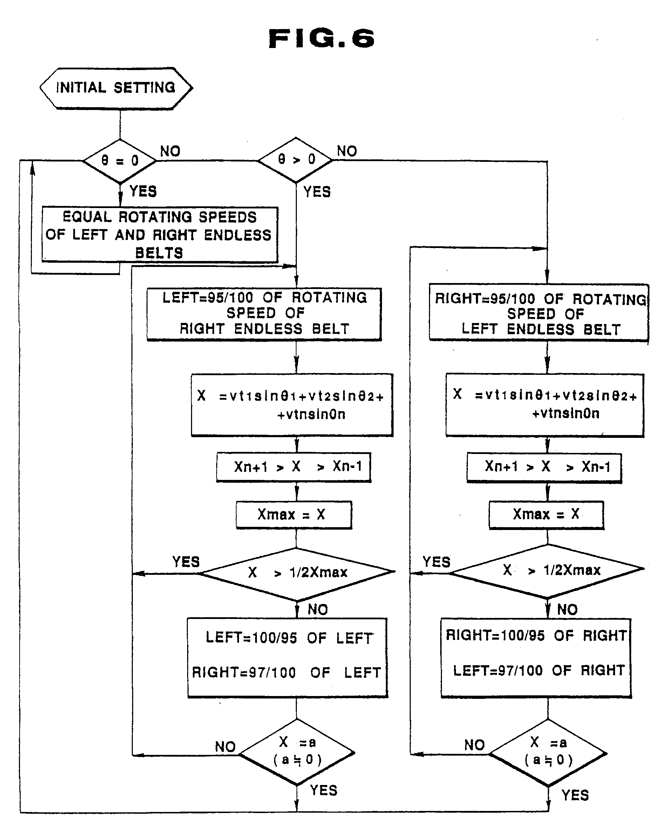

Fig. 6 is a flow chart showing the procedure of control by means of the travel direction control device of Fig. 1(a).

Figs. 1(a) and 1(b) are a plan view and a side elevation, each showing the general structure of a wall crawler of the vacuum suction type to which a travel direction control device according to the present invention is applied.

Fig. 2 is a fragmental enlarged side elevation shwoing how a difference in angular speed of rotation is generated between the surfaces of rotating endless belts of the wall crawler.

In Figs. 1(a), 1(b) and 2 a wall crawler A includes a frame or body 1 and a pair of endless belts 2a and 2b which are rotatably mounted one on each of the two sides, respectively, of the body 1 in the direction of travel of the crawler in such manner that they are tensed between a drive wheel 3 and a coupled drive wheel 4. The endless belts 2a and 2b are made out of comparatively thick material having sucking and cushioning properties such as sponge rubber. The endless belts 2a and 2b are formed thereon by means of a plurality of vacuum suction sections 5a and 5b successively arranged at given intervals. The vacuum suction sections 5a and 5b are suited for providing frictional holding force due to the effect of vacuum suction being sufficient to permit the crawler A to move on a wall B while it is held thereon. Resulting from the vacuum suction sections 5a and 5b being operated, each of the endless belts 2a and 2b is varied in thickness from an initial thickness $T_0$ which is a thickness of the belt material to an actuation thickness $T_1$. The crawler A also includes a pair of drive motors 6a and 6b for rotationally driving the endless belts 2a and 2b independently from one another. A micro-computer 7 for controlling the actuation of the whole crawler including the drive motors 6a and 6b is arranged on the crawler A. Moreover, an inclination angle detecting sensor 8 is mounted on the crawler A for detecting the inclination angle of the crawler A or body 1 with respect to the direction of movement of the crawler A or body 1 and for generating an electrical signal or an inclination angle detecting signal representing the inclination angle found.

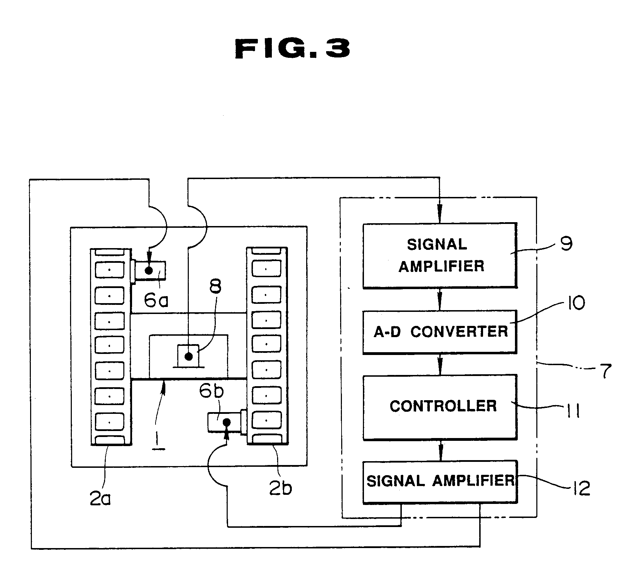

Fig. 3 is a block diagram showing a circuitry of the described embodiment of the travel direction control device. The inclination angle detecting signal generated by means of the inclination angle detecting sensor 8 with respect to the inclination angle detected by said sensor is supplied to the micro-computer 7, wherein it at first is amplified by an amplifier 9 and the converted into a digital signal by an A-D converter 10, such signal subsequently being treated by signal processing in a controller 11, as will be described hereinafter. The controller 11 generates a control signal corresponding to the above digital signal, which by means of a signal amplifier 12 is fed to the rotational drive motors 6a and 6b for controlling the motors independently from one another.

This results in a directionally stable straight-line movement of the crawler A.

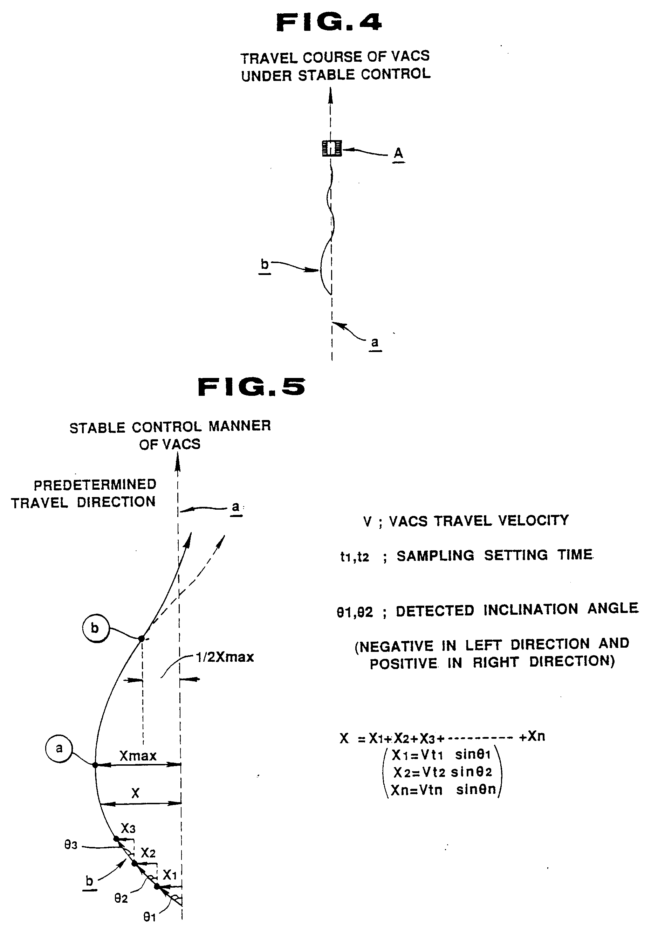

The following description is made on the assumption that the crawler A or VACS ist set to forwardly travel along a course $\bar{a}$ in a straight-line direcion of movement as shown in Figs. 4 and 5. When the crawler A moves on a false course $\bar{b}$ deviating from the course $\bar{a}$ by an angle $\theta_1$ to the left-hand side due to any cause such as the unevenness of the wall, the unbalanced weight of the crawler or the like, the inclination angle detecting sensor 8 detects the deviation $\theta_1$ from the course $\bar{a}$ and generates an inclination angle detecting singal corresponding to said deviation, such signal then being supplied to the micro-computer 7. The micro-computer 7 decelerates the speed of the right-hand drive motor 6b and thus the right-hand endless belt 7b carries out the correction in direction of travel in dependance on the sensor signal. The correction is preferably carried out in such manner that a sudden deceleration of the crawler is avoided in order to make sure that the crawler moves as smoothly as possible.

The distance X of the path of the crawler A from the predetermined course $\bar{a}$ to a false course $\bar{b}$ is calculated in accordance with the following equation on basis of the velocity v of a crawler A set in the micro-computer 7, a sampling time t and sind $\theta_n$, where $\theta_n$ is the angle of deviation of the crawler A from the direction of the predetermined course $\bar{a}$.

$$X = vt_1 \sin\theta_1 + vt_2 \sin\theta_2 + \cdots + vt_n \sin\theta_n$$

In order to gradually decrease the deviation X, the rotational speed of the right-hand endless belt 2b is decreased to a given amount, for example 95% of the initial speed.

Subsequently the crawler A which thus is directionally corrected towards the right-hand side automatically turns to the right at position a. The inclination angle detecting sensor 8 detects that the moving crawler A now is changing its movement to the right. The value of $X_{max}$ which is the distance X of the crawler from the course $\bar{a}$ at this moment is stored. Then, the rotational speed of the endless belt 2b which had been decreased is returned to the initial speed at a position b (X = 1/2 $X_{max}$). Then, the rotational speed of the left-hand endless belt 2a is decreased to a given amount, for example 97% of the initial speed, and the above-described procedure is repeated, resulting in the directional correction being effected smoothly, as shown in Fig. 4. This substantially leads to X = a (a ≠ 0) and thus the crawler returns to the predetermined course a.

To summarize the above, the travel direction control method for the vacuum wall crawler comprise detecting adeviation angle of the travel direction of the crawler with respect to a desired straight-line course. Then, the crawler is moved in a first arc having a first radius and a curvature to bring the crawler A back to the straight-line course a. After the distance X of the crawler from the straight-line course a has decreased to a predefined amount, preferably one half of the maximum distance $X_{max}$, which is amount is smaller than the maximum distance, the crawler A is moved in a second arc having a second radius and a curvature opposite to the curvature of the first arc in relation to the straight-line course a. Preferably the radius of the second arc is larger than the radius of the first arc. The different radii are produced by controlling the rotational speeds of the endless drive belts 2a and 2b of the crawler A.

From the flow chart of Fig. 6 the procedure of control of the travel direction control is to be seen. The crawler A starts with an initial speed setting of the two endless belts 2a and 2b. As long as $\theta = 0$, the two endless belts 2a and 2b run with the initial speed, i.e. at the same initial speed. If $\theta \neq 0$, there is another decision whether $\theta > 0$ or $\theta < 0$. In the case of $\theta > 0$, which means that the crawler A is positioned at an angle to the direction of course a pointing to the right of the course a, the left-hand endless belt 2a is controlled to run at a rotating speed of 95/100 of the initial speed at which the right-hand endless belt 2b still is running. With this difference of speeds of the endless belts 2a, 2b the crawler A moves along an arc having a curvature to bring the crawler back to the course a. During this movement the distance X of the crawler A from the course a is continuously calculated and the value $X_{max}$ is stored as soon as reached. After $X_{max}$ having been reached, X again is decreased, and as soon as X > 1/2$X_{max}$ the rotating speed of the left-hand endless belt 2a is returned to the initial value and the speed of the right-hand endless belt 2b is decreased to 97/100 of the initial speed at which the left-hand belt now again is running. The above steps are repeated until X = a (a = 0), at which point the control returns to the initial control where both endless 2a, 2b run at the initially set speeds and $\theta = 0$.

The above steps of control are also carried out in case of $\theta < 0$, wherein of course at first the speed of the right-hand endless belt 2b is reduced to 95/100 of the initinal setting and, after X <

1/2$X_{max}$, the speed of the right-hand endless belt 2b is returned to the initial speed and the speed of the left-hand endless belt 2a is reduced to 97/100 of the speed of the right-hand belt 2b.

## Claims

1. A travel direction control method for a vacuum wall crawler adapted to be moved by means of a pair of rotational drive means while holding itsself on a wall with the aid of vacuum suction means, comprising
   - detecting a deviation angle of the travel direction of the crawler with respect to a desired straight line course,
   - moving the crawler in a first arc having a curvature to bring the crawler back to the straight-line course,
   - after the distance of the crawler from the straight-line course has decreased to a predetermined amount smaller than the maximum distance, moving the crawler in a second arc having a curvature opposite to the curvature of the first arc in relation to the straight-line course, and
   - repeating the above steps until the crawler has returned to the straight-line course.

2. A method according to claim 1, wherein the first arc has a first radius and the second arc has a second radius and the second radius is larger than the first radius.

3. A moving direction control device for a vacuum wall crawler (A) adapted to be moved by means of a pair of rotational drive means (2a, 2b) while holding itsself on a wall with the aid of vacuum suction means, comprising:
   - an inclination angle detecting sensor (8) arranged on the crawler (A) for detecting an inclination angle of the crawler with respect to the direction of travel of the crawler to generate an inclination angle detecting signal in proportion to said inclination angle;
   - a micro-computer (7) arranged on the crawler for processing said inclination angle detecting signal out-put from said sensor (8) to control the rotating speeds of said rotational drive means (2a, 2b) depending on said inclination angle detecting signal, to thereby cause said crawler (A) to move in a predetermined direction of travel.

**Patentansprüche**

1. Verfahren zur Steuerung der Fahrtrichtung für ein Raupenfahrzeug mit Saughaftung auf einer Wand, welches dazu angepaßt ist, über ein Paar von Drehantriebseinrichtungen bewegt zu werden, während es auf der Wand mit Hilfe einer Vakuumsaugeinrichtung gehalten wird, umfassend
   - Messen eines Abweichungswinkels von der Fahrtrichtung des Raupenfahrzeugs in Bezug auf einen gewünschten geradlinigen Kurs,
   - Bewegen des Raupenfahrzeugs in einem ersten Bogen, der eine Krümmung hat, um das Raupenfahrzeug zurück auf den geradlinigen Kurs zu bringen,
   - nachdem der Abstand des Raupenfahrzeugs von dem geradlinigen Kurs auf einen vorbestimmten Wert, der kleiner ist als der maximale Abstand, verringert worden ist, Bewegen des Raupenfahrzeugs in einem zweiten Winkel, der eine Krümmung hat, die entgegengesetzt zur Krümmung des ersten Winkels in Bezug auf den geradlinigen Kurs ist und
   - Wiederholen der obigen Schritte, bis das Raupenfahrzeug auf den geradlinigen Kurs zurückgekehrt ist.

2. Verfahren nach Anspruch 1, wobei der erste Bogen einen ersten Radius und der zweite Bogen einen zweiten Radius hat, und der zweite Radius größer ist als der erste Radius.

3. Vorrichtung zur Steuerung der Fahrtrichtung für ein Raupenfahrzeug (A) mit Saughaftung auf einer Wand, das dazu angepaßt ist, über ein Paar von Drehantriebseinrichtungen (2a, 2b) bewegt zu werden, während es selbst auf einer Wand mit Hilfe einer Vakuumsaugeinrichtung gehalten wird, mit:
   - einem Neigungswinkel-Meßsensor (8), der an dem Raupenfahrzeug (A) zur Messung eines Neigungswinkels des Raupenfahrzeugs in Bezug auf die Fahrtrichtung des Raupenfahrzeugs angeordnet ist, um ein Neigungswinkelmeßsignal im Verhältnis zu dem Neigungswinkel zu erzeugen;
   - einem Mikro-Computer (7), der an dem Raupenfahrzeug zur Verarbeitung des Neigungswinkelmeßausgangssignals von dem Sensor (8) angeordnet ist, um die Drehgeschwindigkeiten der Drehantriebseinrichtungen (2a, 2b) in Abhängigkeit des Neigungswinkelmeßsignals zu steuern, um hierdurch das Raupenfahrzeug (A) dazu zu bringen, sich in einer vorbestimmten Fahrtrichtung zu bewegen.

**Revendications**

1. Procédé de commande de la direction d'avancement d'un véhicule chenillé se déplaçant sur un mur par adhérence pneumatique, adapté pour être déplacé à l'aide d'une paire de moyens d'entraînement rotatifs, tout en se maintenant sur une paroi à l'aide de moyens d'aspiration de vide, comprenant:
   - la détection d'un angle de déviation de la direction d'avancement du véhicule chenillé, par rapport à une course rectiligne souhaitée,
   - le déplacement du véhicule chenillé selon un premier arc incurvé, pour ramener le véhicule chenillé dans la course rectiligne,
   - après que la distance du véhicule chenillé par rapport à la course rectiligne ait diminué d'une valeur prédéterminée, inférieure à la distance maximale, le déplacement du véhicule chenillé selon un second arc incurvé dans le sens opposé au premier arc, par rapport à la course rectiligne et
   - la répétition des étapes ci-dessus, jusqu'à ce que le véhicule chenillé soit retourné dans la course rectiligne.

2. Procédé selon la revendication 1, dans lequel le premier arc présente un premier rayon et le second arc présente un second rayon, le second rayon étant supérieur au premier rayon.

3. Dispositif de commande de la direction d'avancement d'un véhicule chenillé (A) se déplaçant sur un mur par adhérence pneumatique, adapté pour être déplacé à l'aide d'une paire de moyens d'entraînement rotatifs (2a, 2b), tout en le maintenant sur une paroi à l'aide de moyens d'aspiration de vide, comprenant:
   - un capteur de mesure d'angle d'inclinaison (8) disposé sur le véhicule chenillé (A) pour détecter un angle d'inclinaison du véhicule chenillé par rapport à sa direction d'avancement, pour produire un signal de mesure d'angle d'inclinaison, proportionnel audit angle d'inclinaison,
   - un micro-ordinateur (7) disposé sur le véhicule chenillé pour traiter ledit signal de mesure d'angle d'inclinaison émis par ledit détecteur de mesure (8), pour commander les vitesses de rotation desdits moyens d'entraînement (2a, 2b) en fonction dudit signal de mesure d'angle d'inclinaison, de manière à provoquer le déplacement dudit véhicule chenillé (A) dans une direction d'avancement prédéterminée.

# FIG.1(a)

# FIG.1(b)

# FIG.2

# FIG.3

SIGNAL AMPLIFIER 9

A-D CONVERTER 10

7

CONTROLLER 11

SIGNAL AMPLIFIER 12

6a

8

6b

1

2a

2b

# FIG.4

TRAVEL COURSE OF VACS
UNDER STABLE CONTROL

<u>A</u>

<u>b</u>

<u>a</u>

# FIG.5

STABLE CONTROL MANNER
OF VACS

PREDETERMINED
TRAVEL DIRECTION

<u>a</u>

b

1/2Xmax

a

Xmax

X

X3

θ3

X2

<u>b</u>

X1

θ2

θ1

V ; VACS TRAVEL VELOCITY

$t_1, t_2$ ; SAMPLING SETTING TIME

$\theta_1, \theta_2$ ; DETECTED INCLINATION ANGLE

(NEGATIVE IN LEFT DIRECTION AND
POSITIVE IN RIGHT DIRECTION)

$$X = X_1 + X_2 + X_3 + \text{---------} + X_n$$
$$\begin{pmatrix} X_1 = V t_1 \ \sin\theta_1 \\ X_2 = V t_2 \ \sin\theta_2 \\ X_n = V t_n \ \sin\theta_n \end{pmatrix}$$

9

# FIG.6

INITIAL SETTING

$\theta = 0$    NO

YES

EQUAL ROTATING SPEEDS
OF LEFT AND RIGHT ENDLESS
BELTS

$\theta > 0$    NO

YES

LEFT=95/100 OF ROTATING
SPEED OF
RIGHT ENDLESS BELT

RIGHT=95/100 OF ROTATING
SPEED OF
LEFT ENDLESS BELT

$X = vt_1 \sin\theta_1 + vt_2 \sin\theta_2 + +vtn\sin\theta n$

$X = vt_1 \sin\theta_1 + vt_2 \sin\theta_2 + +vtn\sin\theta n$

$Xn+1 > X > Xn-1$

$Xn+1 > X > Xn-1$

$Xmax = X$

$Xmax = X$

YES    $X > 1/2 Xmax$

YES    $X > 1/2 Xmax$

NO

NO

LEFT=100/95 OF LEFT

RIGHT=97/100 OF LEFT

RIGHT=100/95 OF RIGHT

LEFT=97/100 OF RIGHT

NO    $X = a$
$(a \fallingdotseq 0)$

NO    $X = a$
$(a \fallingdotseq 0)$

YES

YES